# EUROPÄISCHE PATENTSCHRIFT

(11) **EP 2 934 944 B1**
(45) Veröffentlichungstag und Bekanntmachung des Hinweises auf die Patenterteilung: **18.09.2019**
(21) Anmeldenummer: 13821483.8
(22) Anmeldetag: 23.12.2013
(51) Int. Cl.: B60P 3/36

(54) **LEICHTBAUCHASSIS**
LIGHTWEIGHT CHASSIS
CHÂSSIS LÉGER

(30) Priorität: 21.12.2012 DE 102012025130
(43) Veröffentlichungstag der Anmeldung: 28.10.2015
(73) Patentinhaber: Hymer GmbH & Co. KG, 88339 Bad Waldsee (DE)
(72) Erfinder: EHL, Stefan, 88214 Ravensburg (DE); BUSCHLE, Thomas, 88410 Bad Wurzach (DE)
(74) Vertreter: Otten, Roth, Dobler & Partner mbB Patentanwälte
(86) Internationale Anmeldenummer: PCT/EP2013/077900
(87) Internationale Veröffentlichungsnummer: WO 2014/096445

(56) Entgegenhaltungen:
- DE-A1- 10 044 576
- DE-A1-102004 034 033
- US-A- 3 731 970
- US-A- 4 016 641

## Beschreibung

Die Erfindung betrifft ein Reisemobil-Chassis nach dem Oberbegriff des Anspruchs 1 bzw. ein entsprechendes Chassis für einen Wohnwagen.

Leichtbauweise, insbesondere Leichtbauchassis gewinnen im Aufbau von Reisemobilen und Wohnwagen erheblich an Relevanz. Dies liegt zu einen im Bedarf an immer leichtern und somit sparsameren Aufbauten hinsichtlich des Gesamtgewichts, zum andern ist aber auch die gesetzliche Gegebenheit bestimmter Beschränkungen an das Gesamtgewicht hinsichtlich der vorgeschriebenen Führerscheine für die jeweiligen Absatzmärkte ein wichtiger Faktor beim Entwurf von Reisemobile, Wohnwägen und Freizeitfahrzeugen. Ein Reisemobil aus dem Stand der Technik ist beispielhaft in der DE 10 2004 034 033 A1 beschrieben.

Problematisch an Leichtbau-Chassis und Aufbauten ist, dass sie in der Regel sehr steif ausgebildet sind und aufgrund selbstaussteifender Strukturen keine Verformungsenergie im Falle eines Crashs kontrolliert aufnehmen können. Zu Bereitstellung definierter Knautschzonen können Stoßleisten, ähnlich wie beim LKW angebaut werden. Diese nehmen jedoch beim Reisemobil oder Wohnwagen und Wohnwagen stets wichtigen Stauraum in Anspruch, der sodann nicht mehr für Reisegepäck zur Verfügung steht. Darüber hinaus widerspricht das Anbringen zusätzlicher Randleisten oder Stoßfänger dem ästhetischen Gesamtkonzept, welches bei einem Urlaubsfahrzeug im Vordergrund steht.

Der Erfindung liegt damit die Aufgabe zu Grunde, ein Reisemobil derart weiter zu bilden, dass die genannten Nachteile des Standes der Technik verbessert werden. Insbesondere sollen die Nachteile eines Leichtbau-Aufbaus eines Reisemobils oder Wohnwagens hinsichtlich des entstehenden Gesamtschadens bei einem Unfall verbessert werden.

Erfindungsgemäß wird diese Aufgabe durch ein Reisemobil-Chassis gelöst, welches einen Tragrahmen zur Bereitstellung der statisch tragenden Eigenschaften, eine Bodenlage zur Definition der Aufbauebene für einen Wohnbereich oberhalb der Bodenlage, einen Triebkopf oder Anschlussmittel für einen Triebkopf sowie mindestens einen Hohlraum, insbesondere einen Stauraum im Umgebungsbereich des Tragrahmens umfasst, wobei der Hohlraum am Tragrahmen lösbar befestigbar ist, als austauschbares Modul aufgebaut ist und als Knautschzone für eventuelle Fahrzeugkollisionen dient.

Die Erfindung ist dadurch gekennzeichnet, dass der Hohlraum am Tragrahmen über Flanschmittel derart befestigt ist, dass die Flanschmittel bei einer Kollision zumindest teilweise am Tragrahmen abgleiten.

Auf diese Weise kann bei einer Kollision die notwendige Energie im Hohlraum absorbiert werden, welcher dadurch zwar deformiert und ggf. auch zerstört wird, welcher aber aufgrund seines modularen Aufbaus leicht ersetzbar ist, insbesondere ohne dass Eingriffe am Tragrahmen oder Hauptchassis bzw. der Bodenlage notwendig sind.

Zum Schutz der tragenden Sandwich-Chassis-Struktur sowie der Insassen sollen entkoppelte Stauräume, welche am Heck, seitlich sowie evtl. an der Front eines Chassis angebracht werden die Energie eines Crashs aufnehmen.

Energieabsorptionselemente sowie Sollbruchstellen sind so auszulegen, dass ein Optimum an Insassenschutz bei gleichzeitig möglichst umfangreichem Schutz des Hauptchassis erreicht wird. Bei leichten Auffahrunfällen soll das Hauptchassis vor Beschädigungen geschützt werden. Somit erhält man ein Sandwich-Leichtbauchassis für Wohn- und Reisemobile, welches ein Hauptchassis umfassend aufgebaut ist, an welches "Crash"- und Stauraumboxen angebaut werden.

In einer vorteilhaften Ausführung ist vorgesehen, dass der Hohlraum Flanschmittel umfasst, welche ohne Demontage des Tragrahmens und/oder der Bodenlage ein Ansetzen und Abnehmen des Hohlraums an den Tragrahmen und/oder die Bodenlage ermöglichen.

Durch Austausch der Anbauteile ("Crash-Boxen" = seitliche Stauräume, Garagenkonstruktion am Heck, evtl. zusätzliche Bauteile) kann eine einfache Reparatur erfolgen.

Bei einem schweren Crash soll das Gesamtsystem viel Energie aufnehmen und die Insassen schützen. Auch die Funktion von Airbags ist bei der Abstimmung zu betrachten.

Eine vorteilhafte Ausführung zeigt ein Reisemobil-Chassis, wobei der Hohlraum mindestens drei Wandelemente umfasst, wobei mindestens ein Wandelement einen Abschluss gegenüber der Außenumgebung des Reisemobils ausbildet. Die Einbindung der Hohlräume als "Crash"-Boxen ist dabei einfach in das ästhetische Gesamtkonzept des Fahrzeugs integrierbar. Vorteilhaft ist dabei eine Anbindung der "Crash"- und Stauraumboxen über Sandwichplatten, an welchen eine Deckschichten ausgeklinkt ist.

Es ist überdies vorgesehen, ein Reisemobil-Chassis dadurch zu kennzeichnen, dass zwischen dem Hohlraum und dem Tragrahmen und/oder der Bodenlage Entkopplungsmittel vorgesehen sind, welche eine auf den Hohlraum wirkende Kraft nicht oder geschwächt auf den Tragrahmen und/oder die Bodenlage übertragen. Über die Entkopplungsmittel können insbesondere bei leichteren Unfällen die aufzunehmenden Energien gezielt absorbiert werden, wobei die Energieabsorption vom Trägerrahmen und/oder der Bodenlage entkoppelt erfolgt, so dass an diesen Bauteilen keine Beschädigungen oder übermäßige Beanspruchungen erfolgen.

Es sind auch zusätzliche Bauteile möglich, welche die entkoppelte Anbindung, die Abdichtung sowie die abgestimmte Energieabsorption übernehmen. Es kann zusätzlich mit Schlitzen und Sollbruchstellen versehen werden.

Selbst der Laufboden kann zwei- oder mehrteilig ausgeführt werden, um auch die Kräfte, welche auf die Seitenwände einwirken können vom Hauptchassis zu entkoppeln. Die "Crash"- und Stauraumboxen werden möglicherweise in ihrem Sandwichaufbau zusätzlich mit Schlitzen und Sollbruchstellen zur verbesserten Energieabsorption versehen.

Vorteilhaft ist auch, dass der Hohlraum eines oder mehrere Kompartimente umfasst, welche als mehrere Stauboxen ausgebildet sind und/oder als Stauraumbox mit mindestens einer Trennwand ausgebildet sind. Dies erhöht die Flexibilität beim Gestalten der Stauräume.

Es ist weiterhin vorgesehen, dass die Flanschmittel über eine schiefe Ebene oder eine Parallelführung abgleiten können. Die entsprechende Ausbildung der Flanschmittel ermöglicht einen weitergehenden Schutz der kragenden Chassis-Konstruktion, so dass bei einem Unfall die zu absorbierende Energie nicht oder nur zu einem vorgesehenen Anteil auf den Tragrahmen und/oder die Bodenplatte übertragen wird. Dabei wird die Konstruktion erheblich vereinfacht, da nur parallele Verbindungen geschaffen werden müssen, beispielsweise durch Bolzen, Schrauben, Führungen, Steckverbindungen oder dergleichen.

Bei einer vorteilhaften Ausführung ist vorgesehen, dass der Hohlraum im Wesentlichen aus ineinander steckbaren Wandelementen besteht. Flexible und einfache Aufteilungen sind dadurch möglich.

In einer weiteren Ausbildung des erfindungsgemäßen Chassis ist vorgesehen, dass der Hohlraum Leichtbauplatten umfasst, wobei die Leichtbauplatten insbesondere aus einem Leichtbaukern, vorzugsweise aus einem Schaummaterial oder einer Wabenplatte und mindestens einer Decklage, vorzugsweise aus Metall, Faserverbundstoff oder Kunststoff, bestehen.

Bei hoher Stabilität und gleichzeitigem geringen Gewicht lassen sich somit die Eigenschaften gut auf das Gesamtkonzept des Leichtbaus abstimmen.

Hierzu wird ein Hauptchassis aufgebaut, an welches "Crash"- und Stauraumboxen angebaut werden. Die Anbindung soll beispielsweise über Sandwichplatten erfolgen, an welchen die Deckschichten ausgeklinkt werden. Das Kernmaterial (= z.B. energieabsorbierender Schaum) sorgt für eine ausreichende Anbindung und Abdichtung.

Bei einem vorteilhaften Aufbau eines Reisemobil-Chassis ist vorgesehen, dass der Tragrahmen metallische Längsträger umfasst. Werden die Längsträger insbesondere als Stahlträger ausgebildet, so kann die zusätzliche Struktur aus Leichtbaumaterialien gut angebunden werden, ohne dass eine erhebliche Anzahl an konstruktiven Versteifungsmaterialien verbaut werden müssen. Insbesondere ist es Vorteilhaft, dass der Tragrahmen als Leiterrahmen ausgebildet ist. Dabei sind auch die Querelemente entweder als metallische, oder als Sandwich-Leichtbauplatten aufgebaut.

Wird überdies vorgesehen, dass der Tragrahmen einen Obergurt und/oder einen Untergurt umfasst wobei der Obergurt und/oder der Untergurt vorzugsweise aus Leichtbaumaterialien ausgebildet ist, so kann das Gesamtgewicht des Chassis erheblich reduziert werden, wobei die Aufbauebene flexible Aufbaumöglichkeiten bietet. Ein Obergurt im Sinne der Erfindung ist eine oberhalb des Tragrahmens angeordnete Decklage, welche ggf. die Laufebene oder die Bodenlage bildet und eine oberseitige Versteifung darstellt. Entsprechendes leistet der Untergurt als Versteifung auf der Unterseite. Obergurt und Untergurt sind vorteilhafter Weise als Sandwich-Leichtbauplatten ausgebildet.

Das Prinzip der "Crash-Boxen" soll auch bei einem Sandwich-Komplettchassis verwendet werden. Hier ist die Anwendung umso wichtiger, da bei einem Frontal-Crash bei einem sehr steifen Chassis von extremen Belastungen der Insassen ausgegangen werden kann. Eine Besonderheit gegenüber marktüblichen Reisemobilen ergibt sich durch die Nutzung des Gesamtsystems für Stabilität, Crash-Sicherheit / Insassenschutz, Stauräume und Gewichtsoptimierungen. Es ist ein ebener, durchgehender Boden vom Fahrerhaus in den Wohnbereich vorgesehen. Die Stauräume sollen als "Crash-Boxen" (siehe Beschreibung oben) ausgeführt werden.

Ein aus Sandwichplatten gefertigtes Hauptchassis nimmt Vorder- und Hinterachse, Motor und Antriebsstrang, Lenkung, Armaturenbrett, Sitz- und Gurtbefestigungen sowie die für ein Reisemobil typischen Möbel und Stauräume auf.

Ein weiterer Vorteil ist die Möglichkeit die Boden- und Einstiegshöhe zu reduzieren und durch einen niedrigen Schwerpunkt auch die Fahreigenschaften positiv zu beeinflussen.

Das oben beschriebene Prinzip ist auch auf ein Wohnwagen-Chassis übertragbar. Dabei ist auf die Anbindung eines Triebkopfs zu verzichten. Entsprechende Aufbauten gehören ebenfalls zum erfindungsgemäßen Kerngedanken.

Es ist auch denkbar, dass ein vollständiges Sandwich-Leichtbauchassis aufgebaut wird, wobei die für ein Reisemobile typischen Möbel und Stauräume am Komplettchassis befestigbar sind bzw. von diesem aufgenommen werden.

Unter Sandwich-Leichtbaumaterial wird ein Aufbau verstanden, bei welchem eine Kernlage, beispielsweise aus einem Schaumstoff oder einer Wabenplatte oder dergleichen, von mindestens einer Decklage, vorzugsweise einer oberen und einer unteren Decklage umschlossen wird. Querkräfte sowie Biegemomente werden dabei durch die mittels der Kernlage beanstandeten Decklagen aufgenommen und eine Aussteifung erfolgt durch die sich dadurch ergebenden unterschiedlichen Zug-Dehnungs-Momente bzw. Scherkräfte.

Im Folgenden soll die Erfindung kurz anhand des in den Figuren gezeigten Ausführungsbeispiels näher erläutert werden. Die Erfindung ist jedoch nicht auf die dargestellte Ausführungsform beschränkt. Sie umfasst vielmehr diejenigen Ausführungen, welche von der technischen Lehre der in den Schutzansprüchen angegebenen Gegenstände gebrauch machen.

Es zeigen
- Fig. 1: Eine Darstellung eines Leichtbauchassis mit Leiterrahmen und angesetzten Stauboxen sowie angesetzter Heckgarage;
- Fig. 2: Eine Darstellung nach Fig. 1 ausschließlich mit Stauraumwänden;
- Fig. 3: Eine Darstellung nach Fig. 1 ohne Stauräume;
- Fig. 4a: Einen Ausschnitt aus Fig. 1 zur Verdeutlichung der Flanschmittel;
- Fig. 4b: Eine schematische Darstellung der Entkopplungsmittel;
- Fig. 5: Eine schematische Darstellung der Flanschmittel zum parallelen Abgleiten;
- Fig. 6a-c: Eine Ablaufdarstellung einer Deformation des Hohlraums bei einem Unfall;
- Fig. 7a/b: Eine Veranschaulichung des modularen Aufbaus.

Gleiche bzw. entsprechende Gegenstände werden, soweit zweckmäßig, mit gleichen Bezugszeichen bezeichnet.

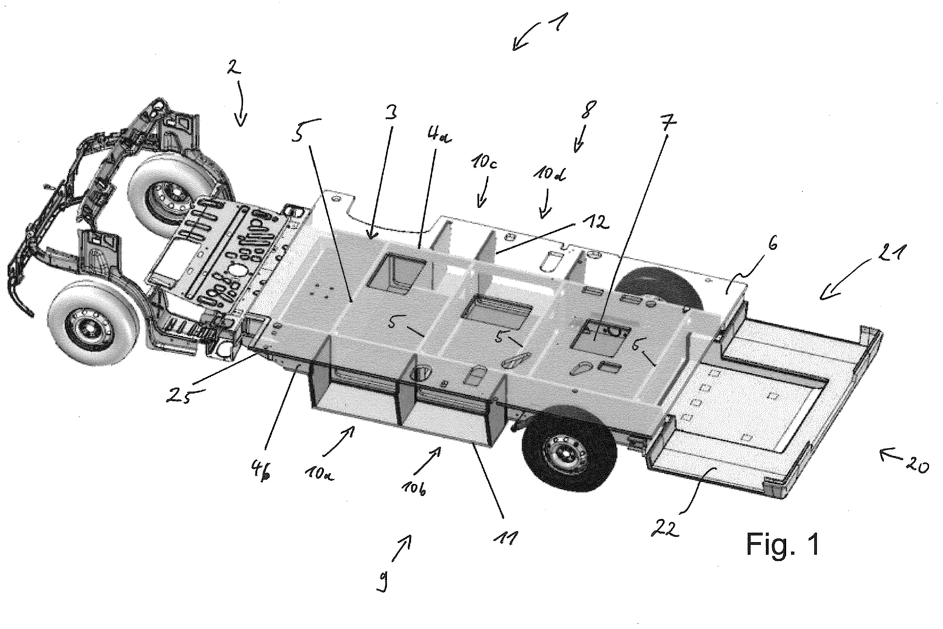

Im Einzelnen zeigt Figur 1 ein Reisemobilchassis 1 mit einem Triebkopf 2 sowie einem Tragrahmen 3. Der Tragrahmen 3 ist als Rahmen mit Längsträgern 4a, 4b sowie Querstreben 5 aufgebaut. Auf seiner Oberseite ist der Tragrahmen mit einer Bodenlage 6 abgedeckt. Auf seiner Unterseite wird der Rahmen durch einen Untergurt 7 verschlossen.

Am Seitenbereich rechts 8 sowie am Seitenbereich links 9 sind Hohlräume 10a-d angeordnet, welche durch angebrachte Hohlraummodule 11, 12 gebildet werden. Die Hohlraummodule 11, 12 umfassen dabei jeweils zwei Hohlräume 10a-d wobei die Längsträger 4a,4b Durchbrechungen aufweisen, damit Gegenstände bis in den Bereich zwischen Bodenlage 6 und Untergurt 7 zugeladen werden können, oder dort eine Montageebene ausgebildet werden kann.

Am Heckbereich 20 ist ein Hohlraum 21 in Form einer Heckgarage vorgesehen. Vorliegend ist nur die Bodenlage 22 der Heckgarage dargestellt, auf welche sodann der Aufbau der Heckgarage erfolgt. Der Treibkopf 2 ist über Anschlussmittel 25 mit dem Tragrahmen 3 verbunden und stellt somit eine Einheit als Reisemobil-Chassis bereit.

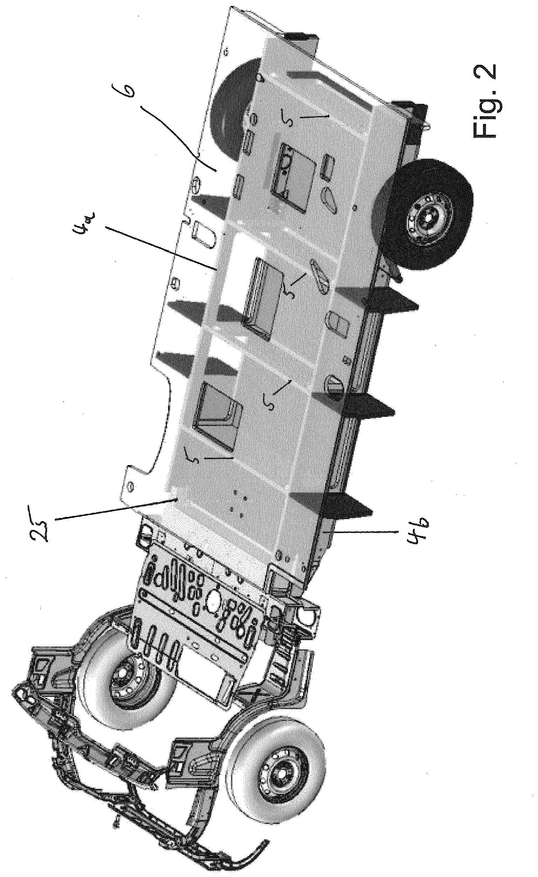

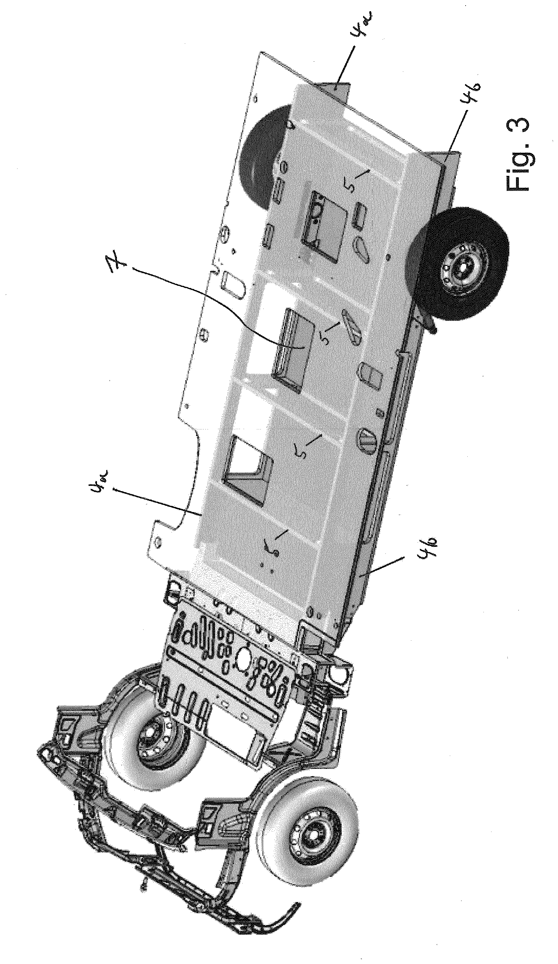

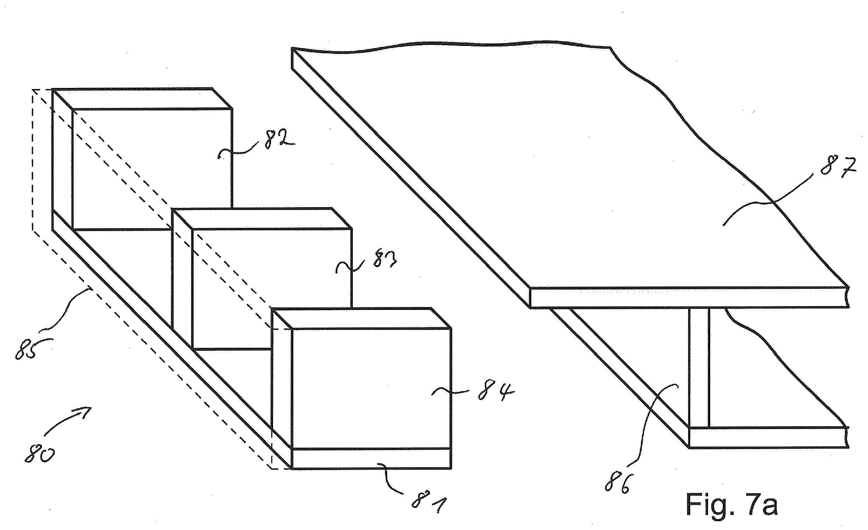

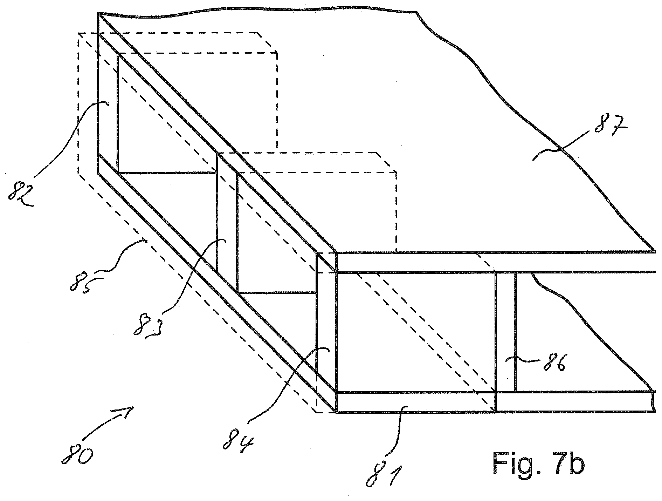

Die Darstellungen in den Figuren 2 und 3 dienen der Erläuterung uns sind entsprechend bezeichnet. In Figur 2 ist angedacht, die Hohlräume eventuell durch separate Trennelemente aufzuteilen, um eine vereinfachte Anbindung des Hohlraummodule (siehe Figuren 7a,7b) auszubilden.

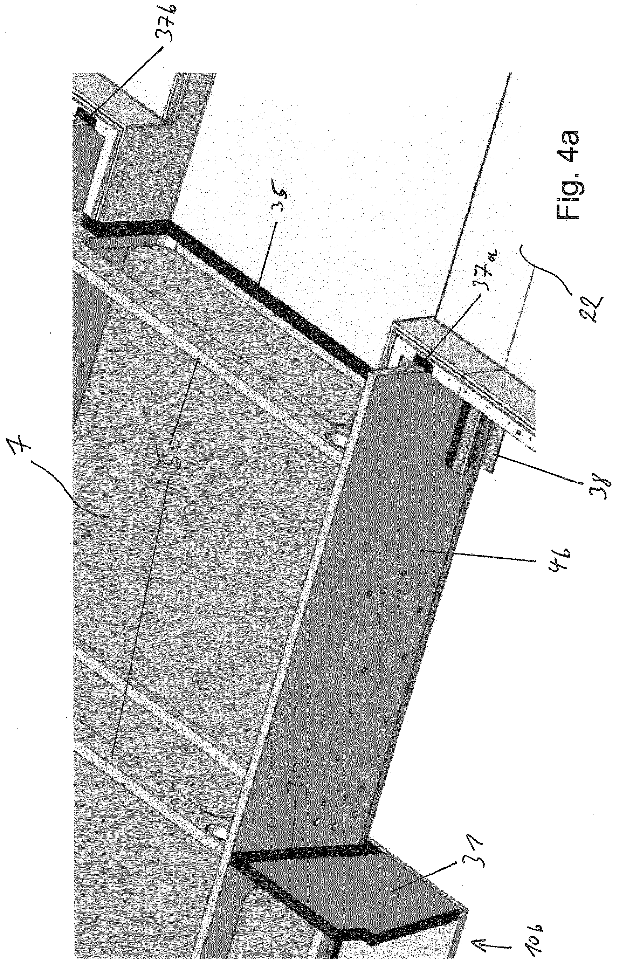

In Figur 4a sind die Flanschmittel 30 zwischen einem Wandelement 31 eines Hohlraums 10b und dem Längsträger 4b dargestellt. Die Flanschmittel können als Steckverbindung, Klebeverbindung, Schraub- oder Bolzenverbindung oder dergleichen ausgeführt werden, je nachdem welche Materialbeschaffenheit für das Wandelement 31 gewählt wird. Ein Flanschmittel 35 ist auch zwischen der Bodenlage der Heckgarage 22 und der hinteren Querstrebe 5 vorgesehen.

Zwischen den Wandungen 36 der Heckgarage und den Längsträgern 4a, 4b sind Entkopplungsmittel 37a,b vorgesehen, welche bei einem leichten Unfall als Energieabsorptionsmittel dienen. Auch das Flanschmittel 35 kann entsprechende Entkopplungseigenschaften aufweisen.

Überdies ist die Bodenlage der Heckgarage 22 über Träger 38 an den Längsträger angeschraubt. Diese Träger können bei einem Unfall parallel zum Längsträger abgleiten und damit ebenfalls als Entkopplungsmittel dienen bzw. eine Sollbruchstelle darstellen. Im Fall eines Bruchs wird der entsprechende Bolzen oder die Schraube ab geschert und die Träger können zueinander einen Parallelversatz ausführen.

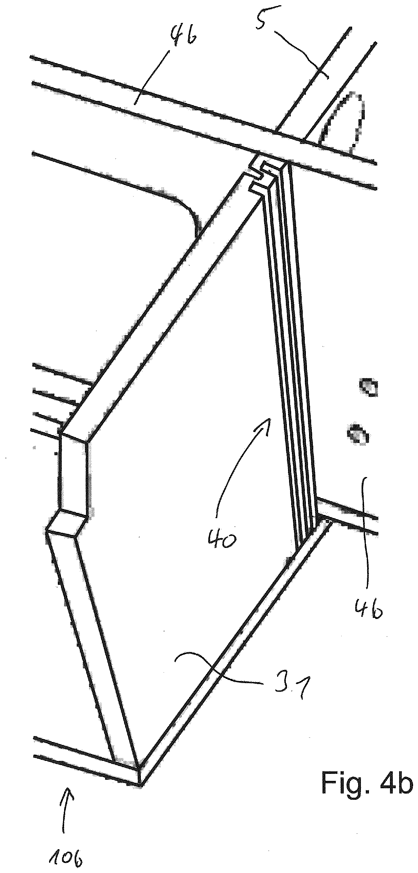

Figur 4b verdeutlicht nochmals ein Entkopplungsmittel 40 in Form einer Mäanderstruktur, bei welchem leichte Deformationen aufgefangen und vom Tragrahmen fern gehalten werden.

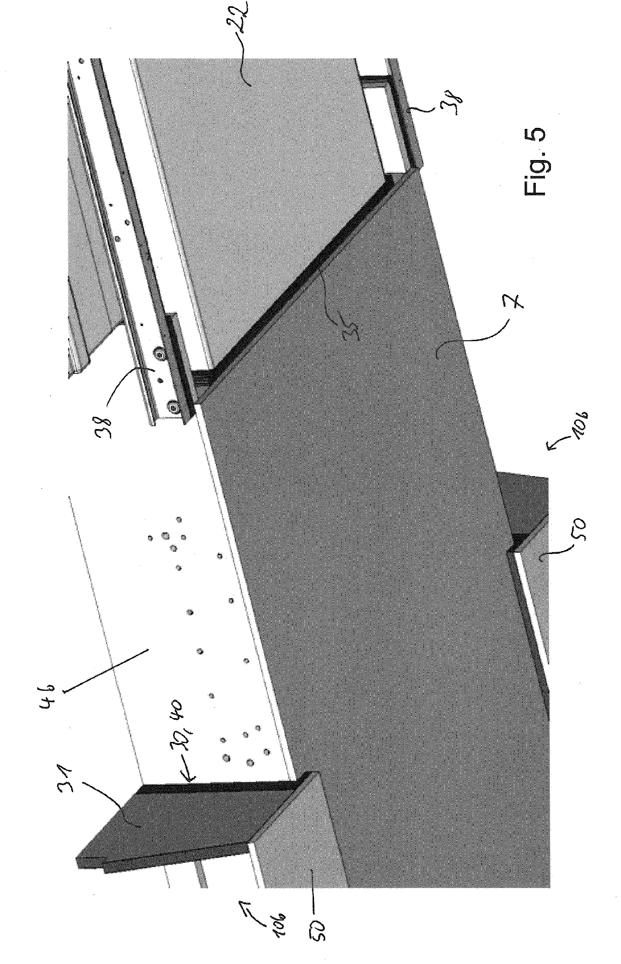

Figur 5 zeigt zur Verdeutlichung die Unterseite der in Figur 4a dargestellten Ausführung. Die Bodenlagen 50 der Hohlräume 10b und 10d können ebenfalls unter den Untergurt 7 parallel abgleiten, so dass auch hier eine entsprechende Entkopplung gegeben ist.

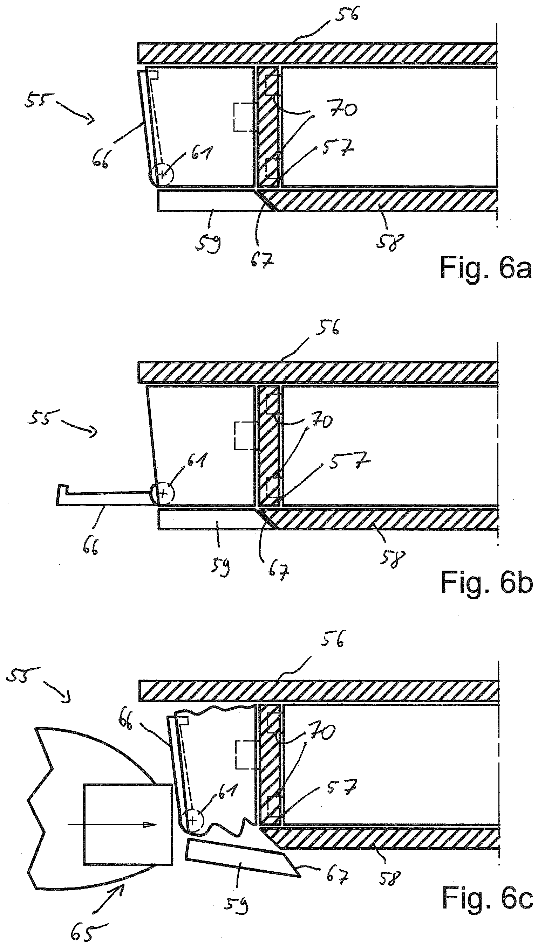

Figur 6 a-c zeigt den Ablauf einer Deformation eines Hohlraums 55. Der Hohlraum wird unterhalb der Bodenlage 56, einseitig vom Längsträger 57 begrenzt und schließt sich an den Untergurt 58 mit seinem Boden 59 an. Der aussenwandige Teil ist mit einer Frontklappe 60 verschlossen, welche über ein Gelenk 61 geöffnet werden kann, damit der Hohlraum beladbar ist (Fig. 6b) .

Bei einem Unfall mit einem Fahrzeug 65 oder dergleichen deformiert sich der Hohlraum 55 (schematisch dargestellt) und der Boden 59 kann durch die Ausbildung der schiefen Ebene 67 abgleiten. Dies ist als alternative Ausführungsform zum oben beschriebenen Parallelversatz angedacht.

Der Hohlraum selbst ist über Flanschmittel 70 an seiner Rückwand mit dem Längsträger 57 verbunden.

Figur 7a und 7b zeigen eine schematische Darstellung eines austauschbaren Hohlraummoduls 80, welches ein Bodenelement 81 drei Wandelemente 82,83,84 uns ein Frontelement 85 (gestrichelt dargestellt) umfasst. Das Frontelement ist als ganzes oder anteilig als Öffnungsklappe auszubilden, je nach dem, welche konstruktiven Anforderungen an den Stauraum gegeben sind. Das Hohlraummodul 80 wird unterhalb der Bodenlage 87 am Tragrahmen 86 angeordnet und bildet sie erfindungsgemäßen "Crash"-Boxen in Form von Stauräumen aus. Fig. 7b zeigt den montierten Zustand.

### Bezugszeichenliste:

- 1: Reisemobilchassis
- 2: Triebkopf
- 3: Tragrahmen
- 4a: Längsträger
- 4b: Längsträger
- 5: Querstreben
- 6: Bodenlage
- 7: Untergurt
- 8: Seitenbereich rechts
- 9: Seitenbereich links
- 10a-d: Hohlräume
- 11: Hohlraummodul
- 12: Hohlraummodul
- 20: Heckbereich
- 21: Hohlraum
- 22: Bodenlage der Heckgarage
- 25: Anschlussmittel
- 30: Flanschmittel
- 31: Wandelement
- 35: Flanschmittel
- 36: Wandung der Heckgarage
- 37a,b: Entkopplungsmittel
- 40: Entkopplungsmittel (Mäander)
- 50: Bodenlage
- 55: Hohlraum
- 56: Bodenlage
- 57: Längsträger
- 58: Untergurt
- 59: Boden
- 60: Frontklappe
- 61: Gelenk
- 65: Fahrzeug
- 67: schiefe Ebene
- 70: Flanschmittel
- 80: Hohlraummodul
- 81: Bodenelement
- 82: Wandelement
- 83: Wandelement
- 84: Wandelement
- 85: Frontelement
- 86: Tragrahmen
- 87: Bodenlage

## Patentansprüche

1. Reisemobil-Chassis (1) umfassend
- einem Tragrahmen (3, 86) zur Bereitstellung der statisch tragenden Eigenschaften,
- Eine Bodenlage (50, 56, 87) zur Definition der Aufbauebene für einen Wohnbereich oberhalb der Bodenlage (50, 56, 87),
- einen Triebkopf (2) oder Anschlussmittel (25) für einen Triebkopf (2),
- mindestens einen Hohlraum (10 a-d, 21, 55), insbesondere einen Stauraum im Umgebungsbereich des Tragrahmens (3, 86),
- wobei der Hohlraum (10 a-d, 21, 55) am Tragrahmen (3, 86) lösbar befestigbar ist, als austauschbares Modul aufgebaut ist und als Knautschzone für eventuelle Fahrzeugkollisionen dient, **dadurch gekennzeichnet, dass**
der Hohlraum (10 a-d, 21, 55) am Tragrahmen (3, 86) über Flanschmittel (30, 35, 70) derart befestigt ist, dass die Flanschmittel (30, 35, 70) bei einer Kollision zumindest teilweise am Tragrahmen (3, 86) abgleiten.

2. Reisemobil-Chassis (1) nach Anspruch 1, **dadurch gekennzeichnet, dass** der Hohlraum (10 a-d, 21, 55) angrenzend an die Bodenlage (50, 56, 87) angeordnet, insbesondere unterhalb dieser Bodenlage (50, 56, 87) im Seitenbereich (8, 9) angeordnet ist.

3. Reisemobil-Chassis (1) nach Anspruch 1, **dadurch gekennzeichnet, dass** der Hohlraum (10 a-d, 21, 55) im Heck des Reisemobil-Chassis (1) angeordnet ist, vorzugsweise eine Heckgarage ausbildet.

4. Reisemobil-Chassis (1) nach einem der vorangegangenen Ansprüche, **dadurch gekennzeichnet, dass** der Hohlraum (10 a-d, 21, 55) Flanschmittel (30, 35, 70) umfasst, welche ohne Demontage des Tragrahmens (3, 86) und/oder der Bodenlage (50, 56, 87) ein Ansetzen und Abnehmen des Hohlraums (10 a-d, 21, 55) an den Tragrahmen (3, 86) und/oder die Bodenlage (50, 56, 87) ermöglichen.

5. Reisemobil-Chassis (1) nach einem der vorangegangenen Ansprüche, **dadurch gekennzeichnet, dass** der Hohlraum (10 a-d, 21, 55) mindestens drei Wandelemente (31, 82, 83, 84) umfasst, wobei mindestens ein Wandelement (31, 82, 83, 84) einen Abschluss gegenüber der Außenumgebung des Reisemobils ausbildet.

6. Reisemobil-Chassis (1) nach einem der vorangegangenen Ansprüche, **dadurch gekennzeichnet, dass** zwischen dem Hohlraum (10 a-d, 21, 55) und dem Tragrahmen (3, 86) und/oder der Bodenlage (50, 56, 87) Entkopplungsmittel (37a,b 40vorgesehen sind, welche eine auf den Hohlraum (10 a-d, 21, 55) wirkende Kraft nicht oder geschwächt auf den Tragrahmen (3, 86) und/oder die Bodenlage (50, 56, 87) übertragen.

7. Reisemobil-Chassis (1) nach einem der vorangegangenen Ansprüche, **dadurch gekennzeichnet, dass** der Hohlraum (10 a-d, 21, 55) eines oder mehrere Kompartimente umfasst, welche als mehrere Stauboxen ausgebildet sind und/oder als Staubox mit mindestens einer Trennwand ausgebildet sind.

8. Reisemobil-Chassis (1) nach einem der vorangegangenen Ansprüche, **dadurch gekennzeichnet, dass** die Flanschmittel (30, 35, 70) über eine schiefe Ebene (67) oder eine Parallelführung abgleiten können.

9. Reisemobil-Chassis (1) nach einem der vorangegangenen Ansprüche, **dadurch gekennzeichnet, dass** der Hohlraum (10 a-d, 21, 55) im Wesentlichen aus ineinander steckbaren Wandelementen (31, 82, 83, 84) besteht.

10. Reisemobil-Chassis (1) nach einem der vorangegangenen Ansprüche, **dadurch gekennzeichnet, dass** der Hohlraum (10 a-d, 21, 55) Leichtbauplatten umfasst, wobei die Leichtbauplatten insbesondere aus einem Leichtbaukern, vorzugsweise aus einem Schaummaterial oder einer Wabenplatte und mindestens einer Decklage, vorzugsweise aus Metall, Faserverbundstoff oder Kunststoff, bestehen.

11. Reisemobil-Chassis (1) nach einem der vorangegangenen Ansprüche, **dadurch gekennzeichnet, dass** der Tragrahmen (3, 86) metallische Längsträger (4a, 4b, 57) umfasst.

12. Reisemobil-Chassis (1) nach einem der vorangegangenen Ansprüche, **dadurch gekennzeichnet, dass** der Tragrahmen (3, 86) als Leiterrahmen ausgebildet ist.

13. Reisemobil-Chassis (1) nach einem der vorangegangenen Ansprüche, **dadurch gekennzeichnet, dass** der Tragrahmen (3, 86) einen Obergurt und/oder einen Untergurt (7, 58) umfasst wobei der Obergurt und/oder der Untergurt (7, 58) vorzugsweise aus Leichtbaumaterialien ausgebildet ist.

14. Wohnwagen-Chassis, **dadurch gekennzeichnet, dass** die Merkmale der vorangegangenen Ansprüche mit Ausnahme des Triebkopfs (2) oder der Anschlussmittel (25) für einen Triebkopf (2) ausgebildet sind.

## Claims

1. Motorhome chassis (1) comprising
- a supporting frame (3, 86) for providing the statically supporting characteristics,
- a floor layer (50, 56, 87) for defining the structural base for a living area above the floor layer (50, 56, 87),
- a traction unit (2) or an attachment means (25) for a traction unit (2),
- at least one cavity (10a-d, 21, 55), in particular a stowage compartment in the region surrounding the supporting frame (3, 86),
- wherein the cavity (10a-d, 21, 55) is detachably fastenable to the supporting frame (3, 86), is constructed as an exchangeable module and serves as a crumple zone in the event of vehicle collisions,
**characterized in that**
the cavity (10a-d, 21, 55) is fastened to the supporting frame (3, 86) by way of flange means (30, 35, 70) such that, in the event of a collision, the flange means (30, 35, 70) at least partially slide off the supporting frame (3, 86).

2. Motorhome chassis (1) according to Claim 1, **characterized in that** the cavity (10a-d, 21, 55) is arranged adjacent to the floor layer (50, 56, 87), in particular is arranged below said floor layer (50, 56, 87) in the side region (8, 9).

3. Motorhome chassis (1) according to Claim 1, **characterized in that** the cavity (10a-d, 21, 55) is arranged in the rear end of the motorhome chassis (1), and preferably forms a rear garage.

4. Motorhome chassis (1) according to one of the preceding claims, **characterized in that** the cavity (10a-d, 21, 55) comprises flange means (30, 35, 70) which enable the cavity (10a-d, 21, 55) to be mounted on and removed from the supporting frame (3, 86) and/or the floor layer (50, 56, 87) without the need for disassembly of the supporting frame (3, 86) and/or floor layer (50, 56, 87) .

5. Motorhome chassis (1) according to one of the preceding claims, **characterized in that** the cavity (10a-d, 21, 55) comprises at least three wall elements (31, 82, 83, 84), wherein at least one wall element (31, 82, 83, 84) forms a termination with respect to the exterior surroundings of the motorhome.

6. Motorhome chassis (1) according to one of the preceding claims, **characterized in that** decoupling means (37a, b, 40) are provided between the cavity (10a-d, 21, 55) and the supporting frame (3, 86) and/or floor layer (50, 56, 87), wherein, by way of the decoupling means, a force acting on the cavity (10a-d, 21, 55) is not transmitted, or is transmitted in weakened form, to the supporting frame (3, 86) and/or to the floor layer (50, 56, 87) .

7. Motorhome chassis (1) according to one of the preceding claims, **characterized in that** the cavity (10a-d, 21, 55) comprises one or more compartments which are in the form of multiple stowage boxes and/or in the form of a stowage box with at least one partition.

8. Motorhome chassis (1) according to one of the preceding claims, **characterized in that** the flange means (30, 35, 70) can slide off by way of an oblique plane (67) or a parallel guide.

9. Motorhome chassis (1) according to one of the preceding claims, **characterized in that** the cavity (10a-d, 21, 55) is composed substantially of wall elements (31, 82, 83, 84) that can be plugged one inside the other.

10. Motorhome chassis (1) according to one of the preceding claims, **characterized in that** the cavity (10a-d, 21, 55) comprises lightweight structural panels, wherein the lightweight structural panels are composed in particular of a lightweight structural core, composed preferably of a foamed material or a honeycomb panel, and of at least one top layer, composed preferably of metal, fiber composite or plastic.

11. Motorhome chassis (1) according to one of the preceding claims, **characterized in that** the supporting frame (3, 86) comprises metallic longitudinal members (4a, 4b, 57).

12. Motorhome chassis (1) according to one of the preceding claims, **characterized in that** the supporting frame (3, 86) is in the form of a ladder frame.

13. Motorhome chassis (1) according to one of the preceding claims, **characterized in that** the supporting frame (3, 86) comprises an upper chord and/or a lower chord (7, 58), wherein the upper chord and/or the lower chord (7, 58) are/is preferably composed of lightweight structural materials.

14. Caravan chassis, **characterized in that** the features of the preceding claims are implemented with the exception of the traction unit (2) or the attachment means (25) for a traction unit (2).

## Revendications

1. Châssis pour camping-car (1), comprenant
- un cadre-support (3, 86) pour fournir les propriétés portantes statiques,
- une couche de plancher (50, 56, 87) pour définir le plan de construction pour une zone d'habitation au-dessus de la couche de plancher (50, 56, 87),
- une unité motrice (2) ou un moyen de raccordement (25) pour une unité motrice (2),
- au moins une cavité (10a-d, 21, 55), en particulier un espace de rangement dans la zone aux alentours du cadre-support (3, 86),
- la cavité (10a-d, 21, 55) pouvant être fixée de manière amovible au cadre-support (3, 86), étant construite sous forme de module remplaçable et servant de zone d'écrasement en cas de collisions éventuelles du véhicule,
**caractérisé en ce que**
la cavité (10a-d, 21, 55) est fixée au cadre-support (3, 86) par le biais de moyens formant bride (30, 35, 70) de telle sorte que les moyens formant bride (30, 35, 70), en cas de collision, glissent au moins en partie sur le cadre-support (3, 86).

2. Châssis pour camping-car (1) selon la revendication 1, **caractérisé en ce que** la cavité (10a-d, 21, 55) est disposée en position adjacente à la couche de plancher (50, 56, 87), en particulier en dessous de cette couche de plancher (50, 56, 87) dans la région latérale (8, 9).

3. Châssis pour camping-car (1) selon la revendication 1, **caractérisé en ce que** la cavité (10a-d, 21, 55) est disposée à l'arrière du châssis pour camping-car (1), de préférence constitue un garage arrière.

4. Châssis pour camping-car (1) selon l'une quelconque des revendications précédentes, **caractérisé en ce que** la cavité (10a-d, 21, 55) comprend des moyens formant bride (30, 35, 70) qui permettent, sans démontage du cadre-support (3, 86) et/ou de la couche de plancher (50, 56, 87), une pose et un enlèvement de la cavité (10a-d, 21, 55) au niveau du cadre-support (3, 86) et/ou de la couche de plancher (50, 56, 87).

5. Châssis pour camping-car (1) selon l'une quelconque des revendications précédentes, **caractérisé en ce que** la cavité (10a-d, 21, 55) comprend au moins trois éléments de paroi (31, 82, 83, 84), au moins un élément de paroi (31, 82, 83, 84) constituant une terminaison par rapport à l'environnement extérieur du camping-car.

6. Châssis pour camping-car (1) selon l'une quelconque des revendications précédentes, **caractérisé en ce qu'**entre la cavité (10a-d, 21, 55) et le cadre-support (3, 86) et/ou la couche de plancher (50, 56, 87) sont prévus des moyens de désaccouplement (37a,b 40) qui ne transmettent pas de force agissant sur la cavité (10a-d, 21, 55) ou qui la transmettent de manière affaiblie au cadre-support (3, 86) et/ou à la couche de plancher (50, 56, 87).

7. Châssis pour camping-car (1) selon l'une quelconque des revendications précédentes, **caractérisé en ce que** la cavité (10a-d, 21, 55) comprend un ou plusieurs compartiments qui sont réalisés sous forme de plusieurs réceptacles de rangement et/ou qui sont réalisés sous forme de réceptacle de rangement avec au moins une paroi de séparation.

8. Châssis pour camping-car (1) selon l'une quelconque des revendications précédentes, **caractérisé en ce que** les moyens formant bride (30, 35, 70) peuvent glisser sur un plan incliné (67) ou un guide parallèle.

9. Châssis pour camping-car (1) selon l'une quelconque des revendications précédentes, **caractérisé en ce que** la cavité (10a-d, 21, 55) se compose essentiellement d'éléments de paroi (31, 82, 83, 84) pouvant être emboîtés les uns dans les autres.

10. Châssis pour camping-car (1) selon l'une quelconque des revendications précédentes, **caractérisé en ce que** la cavité (10a-d, 21, 55) comprend des plaques de construction en matériau léger, les plaques de construction en matériau léger se composant en particulier d'un noyau en matériau léger, de préférence d'un matériau en mousse ou d'une plaque en nid d'abeilles et d'au moins une couche de recouvrement, de préférence en métal, en matériau composite renforcé par des fibres ou en plastique.

11. Châssis pour camping-car (1) selon l'une quelconque des revendications précédentes, **caractérisé en ce que** le cadre-support (3, 86) comprend des longerons métalliques (4a, 4b, 57).

12. Châssis pour camping-car (1) selon l'une quelconque des revendications précédentes, **caractérisé en ce que** le cadre-support (3, 86) est réalisé sous forme de cadre conducteur.

13. Châssis pour camping-car (1) selon l'une quelconque des revendications précédentes, **caractérisé en ce que** le cadre-support (3, 86) comprend une membrure supérieure et/ou une membrure inférieure (7, 58), la membrure supérieure et/ou la membrure inférieure (7, 58) étant réalisées de préférence en matériaux de construction légers.

14. Châssis de caravane, **caractérisé en ce que** les caractéristiques des revendications précédentes sont mises en oeuvres à l'exception de l'unité motrice (2) ou du moyen de raccordement (25) pour une unité motrice (2).
